# EUROPEAN PATENT SPECIFICATION

(11) **EP 0 595 374 B1**
(45) Date of publication and mention of the grant of the patent: **04.02.1998**
(21) Application number: 93120748.4
(22) Date of filing: 13.07.1990
(51) Int. Cl.: B60R 21/20

(54) **Arrangement for forming an air bag deployment opening**
Anordnung zum Formen einer Öffnung zum Aufblasen eines Luftkissens
Aménagement constituant une ouverture pour un déploiement de coussin gonflable

(30) Priority: 14.07.1989 US 380156; 23.01.1990 US 471922
(43) Date of publication of application: 04.05.1994
(62) Divisional of application: 90113466.8
(73) Proprietor: TIP ENGINEERING GROUP, INC., Farmington Hills, MI 48018 (US)
(72) Inventor: Bauer, David J., West Bloomfield, MI 48322 (US)
(74) Representative: Schaumburg, Thoenes, Thurn Patentanwälte

(56) References cited:
- DE-A- 2 053 565
- DE-A- 3 545 028
- US-A- 3 632 136

## Description

### Background of the Invention

This invention concerns auto safety systems and more particularly inflatable cushion devices commonly referred to as "air bags". In such devices, a fabric cushion (the air bag) is stored in a folded condition within a receptacle defining a storage space within the vehicle passenger compartment. Upon activation of a crash sensor detecting an imminent high velocity impact, the air bag is inflated with a chemically generated gas and deployed in a manner and position calculated to absorb the impact of the driver or passenger thrown forward as the vehicle is sharply decelerated at impact.

The folded air bag, gas generator, and other components of the system may be stored within a receptacle mounted in the steering wheel or behind the instrument panel forward of the passenger seat, covered by one or more doors which are opened by pressure generated by the inflating air bag.

The receptacle must be stored in a manner which is tamper-proof, yet allowing instantaneous deployment of the air bag upon system activation. Further, the covering must resist normal pressure exerted thereon as by incidental contact with the vehicle occupants.

Prior art systems have typically involved exteriorly visible patterns on the surface instrument panel or steering wheel covers delineating the openings therein through which the air bag will be deployed.

The presence of the visible pattern reduces the aesthetic appeal of the interior trim surfaces and is disturbing to many persons as it makes the presence and possible pending deployment of the air bag obvious. This visible pattern also makes the system more vulnerable to tampering because of its evident location.

The usual approach in designing a closure is to provide a hinged door latched by a detent mechanism or snap fitted portions forced apart by the pressure of the inflating air bag. See U.S. patent 4,327,937 issued on May 4, 1982 on a "Downwardly Foldable Covering For a Gas Cushion" for an example of such a covering.

Another common approach is to provide an exteriorly visible line of weakening in a covering skin which is ruptured by the air bag upon deployment. See for examples of such a design U.S. patent 4,400,010 issued on August 23, 1983 for "Air Bags in Motor Vehicles", and U.S. patent 4,334,699 issued on June 15, 1982 for "Cap Like Cover for an Air Bag Installation".

U.S. patent 3,640,546 issued on February 8, 1972 for a "Safety Apparatus" discloses a preweakened covering skin over closure doors but the seam skin is unsupported along the seam, and thus the seam would be tactilely perceptible and also, over time, would also become visible due to the absence of any support underneath.

Another approach is described in U.S. patent 3,632,136 issued on January 4, 1972 for a "Safety Apparatus", in which a powerful linear shaped explosive charge is used to sever a door lock and reinforcing panel to release a locked door just prior to deployment of the air bag to enable the door to be pushed open by the air bag.

In all of the above designs, the outline of the closure is suggested, and some also result in the showering of debris into the passenger compartment when the system is activated.

Most designs also use separately manufactured and installed covering doors, which increases the cost of manufacture of the air bag installation.

In copending U.S. patent application Serial No. 07/303,132 filed on January 30, 1989 there is disclosed an invisible closure utilizing a length of detonation cord to create an air bag deployment opening in an interior auto body panel to avoid any suggestion that an air bag is installed therein.

The covering cap described in DE-A-35 45 028 covers an air bag device and contains detonating cords which define a tear line for an opening in the covering cap. The size of the covering cap essentially corresponds to the deployment surface for the air bag. The edge of the covering cap is visible to an observer from within the passenger compartment. This means that the observer can exactly locate the air bag device. Furthermore, the covering cap according to DE-A-35 45 028 comprises several layers, wherein the outer layer is a foam layer. Detonating cords are arranged within or beneath the foam layer.

It is the object of the invention to provide an arrangement for forming an air bag deployment door opening and an instrument panel for the interior of an automobile passenger compartment which makes it impossible for an observer to locate the air bag.

This object is achieved by the features of independent claims 1 and 3. Advantageous improvements of the invention are defined in the dependent claims.

The present invention provides an invisible air bag installation by the controlled application of energy to cut through the covering skin of a seamless expanse of a trim panel, in a pattern shaped so as to form a deployment opening immediately above an air bag receptacle mounted behind the trim panel.

The remaining portions of the trim panel adjacent about the pattern are easily able to be pushed aside by inner door panels opened by the expanding air bag to enable deployment through the opening.

The air bag covering is thus integrated with the trim piece, and does not require separate manufacture or assembly to the trim piece.

In a first embodiment, a linear thermal generating element is utilized, comprised of a length of material composed of contiguous pieces of dissimilar metals, and is mounted within the trim panel adjacent a covering outer skin layer in the pattern of the deployment opening, which element when activated causes very rapid alloying of the metals. The alloying process generates sufficient heat to almost instantly degrade the skin layer in the desired pattern. The deploying air bag is able to readily sever the remaining portions of the trim panel along the pattern and thus open the door so formed.

In another embodiment, a linear explosive charge is confined within a length of tubing extending within the trim panel in the pattern of the opening to be formed therein; the tube is tooled and positioned with a series of holes facing the covering skin portions to be severed. The products generated by the detonation of the charge within the tube pass out through the openings as pressurized gas so that the force of the explosion is confined and directed to sever only the covering skin and adjacent panel material. This results in reliable formation of the deployment opening in a trim panel while reducing blast and eliminating showering of debris into the passenger compartment.

In a third embodiment, another form of linear explosive is utilized, comprised of a tube arranged within the trim panel in the pattern of the deployment opening. The tube has a layer of explosive deposited about its interior and is slit along its length, on the side adjacent the panel portion to be severed, so that upon detonation of the explosive, the blast opens the tube along the slit and a flame front is directed outwardly in that direction. The concentrated flame front severs the skin of the trim panel, to reliably form the deployment opening without creating a blast of particulates or other debris directed into the passenger compartment upon activation.

In each embodiment, one or more a rigid inner door panels are forced open by the deploying air beg and sever the remaining portions and pushes open the covering so formed as the air bag is inflated.

Each of these embodiments provide a visually and tactilely imperceptible and tamper proof covering for an air bag installation located behind an automobile interior trim panel or piece, which opens reliably to enable proper deployment of the air bag within the very short time period required.

The energy applying linear element may be combined with a mechanical preweakening of the covering skin in a pattern matching that of the linear elements. This mechanical preweakening is accomplished by cutting a groove into the inside surface of the skin to a carefully controlled depth to provide for a consistent preweakening of the skin in a matching pattern to argument the effect of activation of the linear element.

### DESCRIPTION OF THE DRAWINGS

FIGURE 1 is a perspective fragmentary view in phantom of the forward position of an automobile illustrating air bag covering installations according to the present invention.

FIGURE 2 is a transverse sectional view of a trim panel having an arrangement of linear thermal generators mounted embedded therein to enable an air bag deployment opening to be formed therein according to the present invention.

FIGURE 3 is an enlarged fragmentary perspective view of the arrangement of a trim panel and thermal generator elements according to the present invention.

FIGURE 4 is a fragmentary perspective view of an instrument panel having an alternate air bag deployment opening forming arrangement according to the present invention.

FIGURE 5 is a transverse sectional view of the instrument panel and opening forming arrangement shown in FIGURE 4.

FIGURE 6 is a transverse sectional view through an instrument panel and yet another embodiment of an opening forming arrangement according to the present invention.

FIGURE 7 is a perspective view of the shock tube element incorporated in the opening forming arrangement shown in FIGURE 6.

FIGURES 8 to 10 show the combination or the invention with a mechanical pre-weakening.

### DETAILED DESCRIPTION

In the following detailed description, certain specific terminology will be employed for the sake of clarity and a particular embodiment described, but it is to be understood that the same is not intended to be limiting and should not be so construed inasmuch as the invention is capable of taking many forms and variations within the scope of the appended claims.

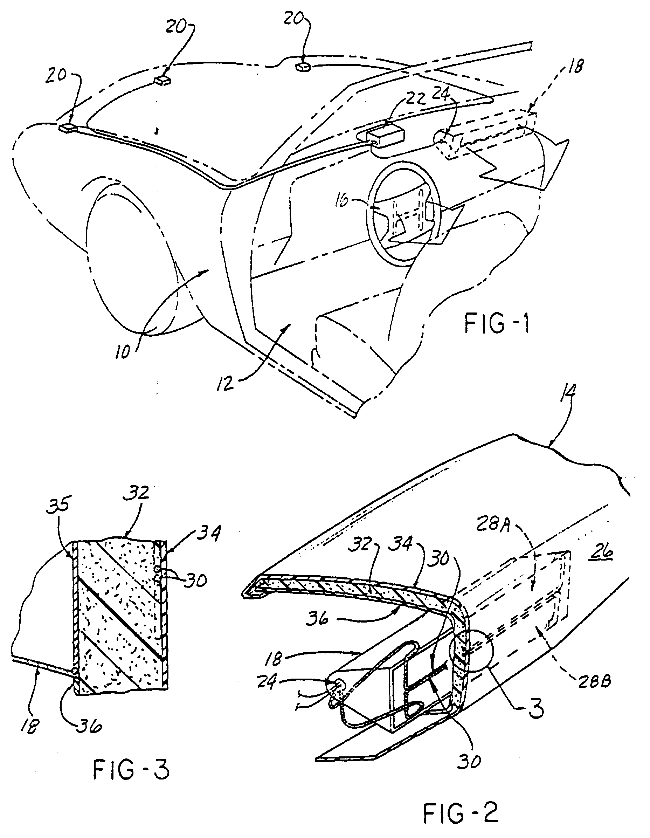

Referring to FIGURE 1, the major components of an air bag safety system are depicted installed in an automobile. The automobile body 10 has a passenger compartment 12, with various trim panels or pieces finishing the interior thereof.

The air bag system may include a passenger side air bag stored behind an instrument panel 14 and a driver side air bag stored beneath a steering wheel cover 16, the instrument panel 14 and steering wheel cover 16 each comprising such an interior trim panel or piece arrayed about the passenger compartment.

Each air bag installation includes a receptacle 18 containing a folded air bag, which is deployed into the passenger compartment by being inflated with a gas in the manner well known to those skilled in the art. A plurality of crash sensors 20 are arranged about the front of the vehicle which upon the occurrence of a severe collision, generate electrical signals received by a control unit 22, which in turn activates the gas generator contained within the receptacle 18.

Since such air bag systems are well known in the art, and the present invention is not concerned with the details thereof, a description of these details is not here set out.

Suffice it to say that the gas generators typically are activated by an ignitor assembly 24 which upon receiving an electrical signal, ignite a chemical charge to produce a high temperature reaction which in turn initiates the chemical reaction producing a large volume of nitrogen gas for inflation of the air bag.

As described above, the air bag must be stored ready for deployment, until such collision occurs.

According to the concept of the present invention, a deployment opening is formed by the controlled application of concentrated energy onto a smooth, uninterrupted expanse of a trim panel, or other piece behind which is mounted an air bag, at the instant of deployment of the air bag.

Such opening is almost instantly formed by the very rapid application to the covering skin therein of energy sufficient to form a line of separation in a pattern shaped to form three sides of a single covering outer door, or of a pair of covering outer doors, with the other side or sides bent by the force of the inflating air bag to act as a hinge to open the door so formed.

The trim panel or piece is constructed so that the remaining portions thereof in the region above the air bag receptacle are sufficiently weakened to be easily severed by receptacle doors pushed open by the air bag itself.

A first embodiment of the invention is illustrated in the application of the invention to a so-called midmount installation, which is shown in Figures 1-3. A pair of such covering doors 28A and 28B are formed at the instant of system activation into a smooth expanse 26 of the instrument panel 14, hinged along opposite sides in moving to form a deployment opening.

In this first embodiment of the present invention, lengths of linear thermal generating elements 30 are embedded in the instrument panel 14 in the described double door pattern over the air bay receptacle 18. As shown in Figure 3, the elements 30 are located just below the covering outer layer here comprised of a vinyl skin 34. The trim panel such as the instrument panel 14 is constructed to have sufficient structural integrity to enable assembly and to resist normal contact pressures. Such construction is typically provided by a stiff underlayer 36 of metal or rigid plastic overlain by a layer of soft foam 32 and covered by the skin 34.

According to the concept of the present invention, the underlayer 36 has an opening formed therein shaped to allow the air bag receptacle 18 to be received thereinto, leaving only the layer of foam 32 and the skin 34 above a hinged inner door or doors 35 covering the receptacle 18. Such inner doors 35 may alternatively be incorporated in the instrument panel 14. The receptacle 18 is mounted as by bracketing (not shown) to be supported beneath the instrument panel 14 in the position shown in FIGURE 3.

The thermal generating elements 30 may comprise a material consisting of two diverse metallic elements in intimate contact with each other. When these elements are subjected to an initiating temperature, a very rapid alloyiny reaction occurs, in which a great amount of heat is released. Such material in thin wire or ribbon form, comprises an outer core of a palladim alloy and an inner core of aluminum alloy is commercially available under the trademark "PYROFUZE" (TM) from Pyrofuze Corp. of Mount Vernon, NY.

Preferably, several of these elements each of small diameter, i.e., 0,1016 or 0,127 mm (0,004 or 0,005 inches) thick, are twisted together to generate sufficient heat while maintaining the very high speed reaction required.

This reaction is not explosive and results in a heat degradation of the vinyl skin 34 in the pattern of the element 30 sufficient to allow the inner doors 35 and deploying air bag to push out and separate the adjoining sections of the foam layer 32 thereof.

The elements 30 may be directly connected to the air bag ignitor assembly 24, thereby insuring coordinated activation simultaneously with the air bag deployment.

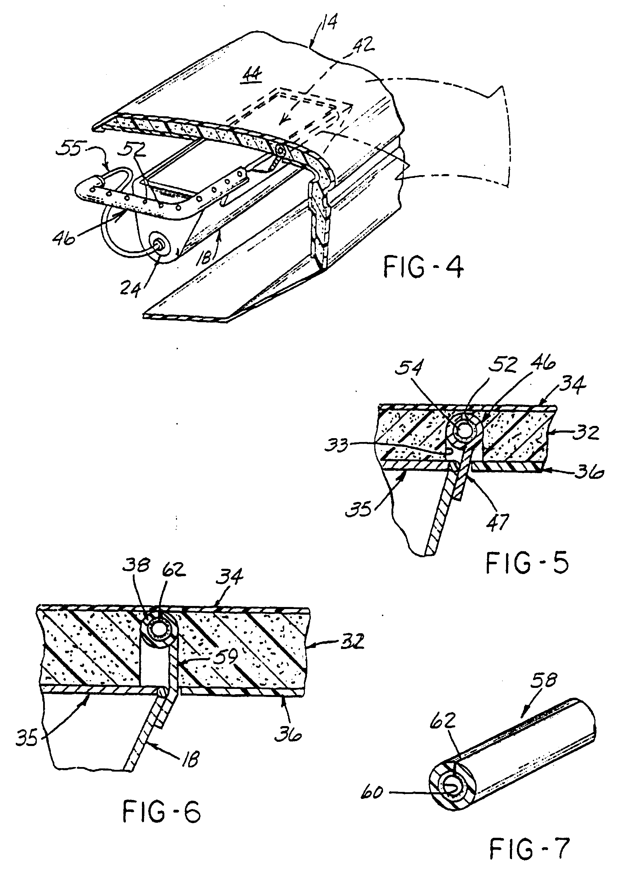

An alternate embodiment is shown in FIGURES 4 and 5, illustrated applied to a "topmount" application in which a single outer door 42 is formed in a smooth expanse 44 of a horizontal surface of the instrument panel 14 to allow deployment of the air bag stored in the receptacle 18 directly beneath the door 42.

In this instance a length of tube 46 of the desired configuration is positioned within a slot 33 let into the foam core 32, firmly mounted by being secured to one side of the air bag receptacle 18 with tabs 47.

The tubing 46 has a series of holes 52 directed outwardly towards the skin 34. A length of detonating cord 54 is disposed within the tube 46 and detonated by transmission of shock via a connector tube 55 with the ignitor assembly 24 of the air bag system itself so as to be simultaneously discharged. The detonating cord 54 may be commercially available as low power "Primaline" (TM).

As a result, a series of gas pressure jets are directed to perforate or otherwise degrade the skin 34 in the pattern outlining the door 42 so as to allow easy separation of the door 42 upon contact with the expanding air bag. The confinement of the detonating cord 54 within the tube 46 attenuates the intensity of the blast and eliminates the directing of any debris into the passenger compartment.

Yet another embodiment is shown in FIGURES 6 and 7, in which a split sleeve type linear element 58, is embedded in the foam core 32 lying beneath the skin 34, arranged in a pattern corresponding to the door to be formed. The element 58 is secured to the receptacle 18 with formed tabs 59. A thin layer of explosive 60 coats the inside of a plastic tube 61. When detonated, a flame front propagates extremely rapidly along the slit 62, which is forced open by the pressure generated by detonation.

This flame front very effectively slices through the skin 34 to form the door through the unmarked expanse of instrument panel 14.

Such material is available under the trademark "NONEL" from the Ensign-Bickford Company of Simsbury, Connecticut.

The invention provides a strong tamper proof covering of the air bag receptacle which is invisible to the vehicle occupants, yet instantly provides an opening for proper deployment of the air bag upon activation of the system. By integrating the covering doors into the trim piece itself, the overall cost of manufacture is reduced and the system is simplified.

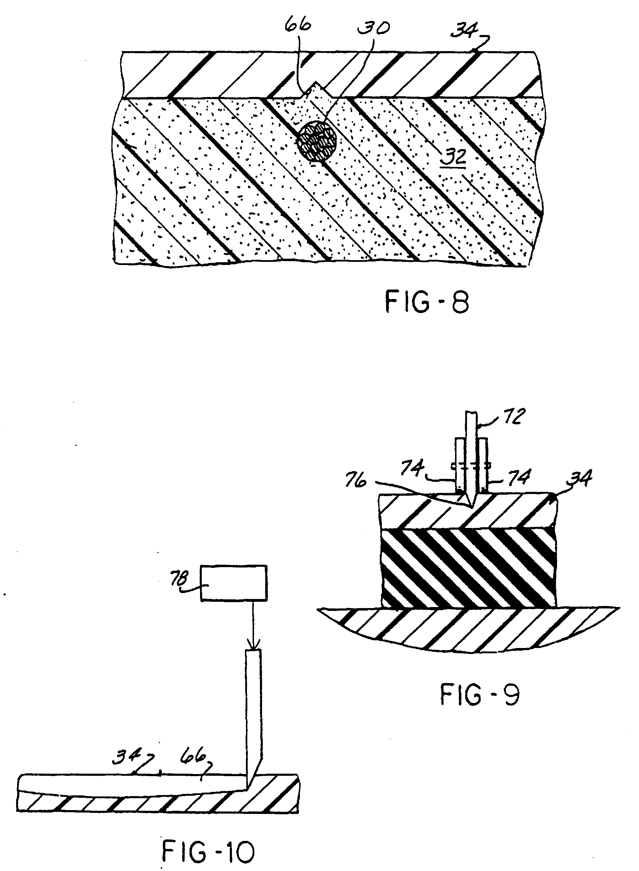

The above described arrangements may also be combined with a mechanical preweakening of the outer layer covering skin 34, as depicted in FIGURE 8.

This preweakening must be able to be accomplished to a uniformly consistent level in production.

According to this aspect of the concept of the present invention, this preweakening is achieved by cutting into the skin 34 along the inside surface thereof to form a groove 66 of a consistently controlled depth, and extending in the pattern of the opening to be formed. The groove 66 thus lies above the linear element.

As noted, it is critical that the partial cutting of the inside of the skin 34 be consistently held to the designed for depth. FIGURE 9 illustrates how this can be effectively done. A suitable cutting blade 72 has mounted to it guide elements 74 such as rollers adapted to rest on the surface of the skin 34 as the blade 72 traverses the skin 34. The distance below the surface of the skin 34 that the cutting edge 76 protrudes corresponds to the depth of cut, and should be set accordingly.

According to one aspect of this method, substantial compression of the skin material below the cutting edge 76 should be avoided in order to achieve a consistent depth. This requirement may be met by placing the skin 34 on a bed of a more easily compressed material than that of the skin, i.e., for example a layer of neoprene rubber 77 may be placed beneath a vinyl skin. This allows a slight deflection of the vinyl skin away from the cutting edge 76 to relieve excessive compression leading to erractic and inconsistent results.

The partial cutting of the inside of the skin 34 can also be varied across the width of the disclosure, from a maximum depth at the center to a reduced depth at either side as shown in FIGURE 10. This can be done by varying the depth of the cut 66, as by a cam control 78 or other arrangement. This configuration can insure beginning of the tear at the center and propagation to either side.

Thus, the activation of the element 30 can partially further degrade the skin 34 (and foam 32) in the pattern, with the force of the deploying air bag then mechanically severing the skin 34 along the preweakening groove 66. The reliably severed, combined effect can provide an exteriorly invisible seam forming the air bag deployment opening.

## Claims

1. An arrangement for forming an airbag deployment door opening in an interior trim piece of an automobile passenger compartment (12), said trim piece (14) comprising an instrument panel (14) generally constructed of a rigid substrate (36), a layer of foam (32) overlying said substrate (36) and a decorative skin layer (34) overlying said foam layer (32), said arrangement comprising an inner door panel (35) formed in said substrate (36) and fit within an opening in said substrate (36) at a passenger side location whereat an air bag canister (18) is mounted; an energy generating linear element (30, 38, 46) mounted within said foam layer (32) and beneath said decorative skin layer (34) in a pattern matching said substrate opening and aligned therewith, said decorative skin layer (34) completely overlying said door panel (35) in said substrate (36) and adjacent regions in a smooth uninterrupted expanse to thereby not suggest the location or presence of said deployment door; and energizing means for initiating energy generation by said energy generating linear element (30, 38, 46) just prior to deployment of said airbag, whereby said skin layer (34) is at least degraded in said matching pattern to allow outward movement of said door panel (35) as said air bag deploys.

2. The arrangement according to claim 1 wherein said decorative skin layer (34) is comprised of vinyl material.

3. An instrument panel for the interior of an automobile passenger compartment equipped with an inflatable air bag device (18) adapted to be deployed into a passenger space in said passenger compartment, said air bag device (18) mounted at a particular location behind said instrument panel (14) to normally be concealed from view from within said passenger space, said instrument panel (14) comprising a structure including a covering (34) having an outer surface exposed to view extending smoothly across said location of said air bag device (18) so as to not provide an external indication of said air bag device location;
said instrument panel (14) also including a foam layer (32) continuously underlying said covering (34) and providing continuous support beneath said covering (34) extending across the region of said air bag device location; and,
weakening means (30, 66, 54, 58) located beneath the outer surface of said covering (34) for weakening said instrument panel (14) in a pattern of an opening to be formed therein at said particular location of said air bag device (18) so that a deployment door (28A, 28B) is formed in said instrument panel (14) when said air bag device (18) is activated and said air bag is deployed, which deployment door pattern is not visible from within said passenger space until said air bag device deployment occurs.

4. The instrument panel according to claim 3 wherein said weakening means includes a linear energy element (30) extending in said pattern and adapted to degrade said covering (34) when said air bag device (18) is activated.

5. The instrument panel according to claim 3 wherein said weakening means includes a groove (66) formed on an inside surface of said covering (34) and extending in said deployment door pattern.

6. The instrument panel according to claim 3 wherein said foam layer (32) is disposed immediately beneath said covering (34) to provide said continuous support.

7. The instrument panel according to claim 5 wherein said instrument panel supporting structure includes a rigid substrate door panel and a main rigid substrate panel (36) underlying said foam layer (32) having an opening (35) formed therein, said deployment door substrate panel fit into said opening, a perimeter of said separate main panel and door panel being aligned with said weakening groove pattern in said covering inside surface.

## Patentansprüche

1. Anordnung zum Bilden einer Türöffnung zur Entfaltung eines Airbags in einem Innenverkleidungselement einer Fahrgastzelle (12) eines Kraftfahrzeugs, wobei das Verkleidungselement (14) ein Armaturenbrett (14), das im allgemeinen aus einem steifen Substrat (36) gebaut ist, eine über dem Substrat (36) liegende Schaumstoffschicht (32) und eine dekorative Außenschicht (34), die über der Schaumstoffschicht (32) liegt, umfaßt und wobei die Anordnung ferner umfaßt, eine innere Türplatte (35), die in dem Substrat (36) ausgebildet ist und in eine Öffnung im Substrat (36) an einer Stelle auf der Beifahrerseite paßt, an der ein Airbagbehälter (18) angebracht ist; ein Energie erzeugendes lineares Element (30, 38, 46), das in der Schaumstoffschicht (32) und unterhalb der dekorativen Außenschicht (34) in einer Anordnung angebracht ist, die der Öffnung im Substrat angepaßt und mit ihr ausgerichtet ist, wobei die dekorative Außenschicht (34) die Türplatte (35) im Substrat (36) und angrenzende Bereiche in einer gleichmäßigen und ununterbrochenen Ausdehnung vollständig bedeckt, um dadurch den Ort oder das Vorhandensein der Entfaltungstür nicht anzudeuten; und Aktivierungsmittel zum Auslösen der Energieerzeugung durch das Energie erzeugende lineare Element (30, 38, 46) kurz vor der Entfaltung des Airbags, wobei die Außenschicht (34) in der passenden Anordnung zumindest geschwächt wird, um eine Bewegung der Türplatte (35) nach außen zu ermöglichen, wenn sich der Airbag entfaltet.

2. Anordnung nach Anspruch 1, wobei die dekorative Außenschicht (34) aus Vinylmaterial besteht.

3. Armaturenbrett für das Innere einer Fahrgastzelle eines Kraftfahrzeugs, das mit einer aufblasbaren Airbagvorrichtung (18) ausgestattet ist, die sich in einen Fahrgastraum in der Fahrgastzelle entfalten kann, wobei die Airbagvorrichtung (18) an einer bestimmten Stelle hinter dem Armaturenbrett (14) angebracht ist, damit sie normalerweise vom Fahrgastraum aus nicht sichtbar ist, wobei das Armaturenbrett (14) eine Struktur umfaßt, die eine Abdeckung (34) mit einer sichtbaren Außenfläche enthält, die sich gleichmäßig über den Ort der Airbagvorrichtung (18) erstreckt, um kein äußeres Anzeichen auf den Ort des Airbags zu geben;
wobei das Armaturenbrett (14) ferner umfaßt, eine Schaumstoffschicht (32), die die Abdeckung (34) gleichmäßig unterfüttert und unter der Abdeckung (34) eine gleichmäßige Stütze bietet und sich über den Bereich des Ortes der Airbagvorrichtung erstreckt; und
Schwächungsmittel (30, 66, 54, 58), die unter der Außenfläche der Abdeckung (34) zur Schwächung dieses Armaturenbretts (14) in der Gestalt einer Öffnung, die an dem bestimmten Ort der Airbagvorrichtung (18) ausgebildet werden soll, angebracht sind, so daß in dem Armaturenbrett (14) eine Entfaltungstür (28A, 28B) ausgebildet wird, wenn die Airbagvorrichtung (18) aktiviert wird und sich der Airbag entfaltet, wobei die Anordnung der Entfaltungstür vom Fahrgastraum aus solange nicht sichtbar ist, bis die Entfaltung der Airbagvorrichtung eintritt.

4. Armaturenbrett nach Anspruch 3, wobei das Schwächungsmittel ein lineares Energieelement (30) enthält, das sich in der Anordnung erstreckt und die Abdeckung (34) zerstören kann, wenn die Airbagvorrichtung (18) aktiviert wird.

5. Armaturenbrett nach Anspruch 3, wobei das Schwächungsmittel eine Rille (66) enthält, die an einer Innenfläche der Abdeckung (34) ausgebildet ist und sich in der Anordnung der Entfaltungstür erstreckt.

6. Armaturenbrett nach Anspruch 3, wobei die Schaumstoffschicht (32) direkt unter der Abdeckung (34) angeordnet ist, um die gleichmäßige Stütze zu bieten.

7. Armaturenbrett nach Anspruch 5, wobei die das Armaturenbrett stützende Struktur eine Türplatte aus einem steifen Substrat und eine Hauptplatte (36) aus steifem Substrat umfaßt, die die Schaumstoffschicht (32) unterfüttert und die eine darin ausgebildete Öffnung (35) enthält, wobei die Substratplatte der Entfaltungstür in die Öffnung paßt, und ein äußerer Rand der separaten Hauptplatte und Türplatte mit dem Schwächungsrillenmuster in der Innenfläche der Abdeckung fluchtet.

## Revendications

1. Agencement pour la formation d'une ouverture de porte, destinée au déploiement d'un coussin de sécurité gonflable, dans un élément intérieur de garnissage d'un compartiment (12) de passagers d'une automobile, ledit élément de garnissage (14) comprenant un tableau de bord (14) constitué généralement d'un substrat rigide (36), d'une couche de mousse (32) superposée audit substrat (36) et d'une couche de revêtement décoratif (34) superposée à ladite couche de mousse (32), ledit agencement comprenant un panneau intérieur (35) de porte formé dans ledit substrat (36) et assemblé à l'intérieur d'une ouverture dudit substrat (36) à un emplacement, situé sur le côté passager, où un caisson (18) de coussin de sécurité gonflable est monté; un élément linéaire (30, 38, 46) de génération d'énergie monté à l'intérieur de ladite couche de mousse (32) et au-dessous de ladite couche de revêtement décoratif (34), selon une configuration qui concorde avec ladite ouverture de substrat et est alignée avec elle, ladite couche de revêtement décoratif (34) recouvrant complètement ledit panneau (35) de porte dans ledit substrat (36) et les régions adjacentes en réalisant une étendue lisse ininterrompue afin, de cette manière, de ne pas suggérer l'emplacement ou la présence de ladite porte de déploiement; et un moyen de déclenchement pour lancer une génération d'énergie par ledit élément linéaire (30, 38,46) de génération d'énergie immédiatement avant le déploiement dudit coussin de sécurité gonflable, grâce à quoi ladite couche de revêtement (34) est au moins dégradée dans ladite configuration concordante afin de permettre audit panneau (35) de porte un déplacement vers l'extérieur tandis que ledit coussin de sécurité gonflable se déploie.

2. Agencement selon la revendication 1, dans lequel ladite couche de revêtement décoratif (34) est en matière vinylique.

3. Tableau de bord pour l'intérieur d'un compartiment de passagers d'une automobile, équipé d'un dispositif (18) de coussin de sécurité gonflable apte à être déployé vers un espace de passager dans ledit compartiment de passagers, ledit dispositif (18) de coussin de sécurité gonflable étant monté à un emplacement particulier derrière ledit tableau de bord (14) afin d'être normalement caché à la vue depuis l'intérieur dudit espace de passager, ledit tableau de bord (14) comprenant une structure qui inclut un recouvrement (34) comportant une surface extérieure exposée à la vue qui s'étend de façon lisse au-dessus de la totalité dudit emplacement dudit dispositif (18) de coussin de sécurité gonflable, de façon à ne fournir aucune indication externe dudit emplacement de dispositif de coussin de sécurité gonflable;
ledit tableau de bord (14) incluant aussi une couche de mousse (32) sous-jacente en continu audit recouvrement (34) et constituant un support continu au-dessous dudit recouvrement (34) s'étendant sur toute la région dudit emplacement du dispositif de coussin de sécurité gonflable; et
un moyen d'affaiblissement (30, 66, 54, 58) situé au-dessous de la surface extérieure dudit recouvrement (34) pour affaiblir ledit tableau de bord (14) selon une configuration d'une ouverture qui doit y être formée audit emplacement particulier dudit dispositif (18) de coussin de sécurité gonflable, d'une manière telle qu'une porte de déploiement (28A, 28B) est formée dans ledit tableau de bord (14) lorsque ledit dispositif (18) de coussin de sécurité gonflable est activé et que ledit coussin de sécurité gonflable est déployé, laquelle configuration de porte de déploiement n'est pas visible de l'intérieur dudit espace de passager avant que ledit déploiement du dispositif de coussin de sécurité gonflable ne se produise.

4. Tableau de bord selon la revendication 3, dans lequel ledit moyen d'affaiblissement inclut un élément linéaire (30) d'énergie qui s'étend dans ladite configuration et qui est apte à dégrader ledit recouvrement (34) lorsque ledit dispositif (18) de coussin de sécurité gonflable est activé.

5. Tableau de bord selon la revendication 3, dans lequel ledit moyen d'affaiblissement inclut une rainure (66) ménagée sur une surface intérieure dudit recouvrement (34) et s'étendant dans ladite configuration de porte de déploiement.

6. Tableau de bord selon la revendication 3, dans lequel ladite couche de mousse (32) est disposée immédiatement au-dessous dudit recouvrement (34), afin de constituer ledit support continu.

7. Tableau de bord selon la revendication 5, dans lequel ladite structure de support du tableau de bord inclut un panneau de substrat rigide de porte et un panneau de substrat rigide principal (36) sous-jacent à ladite couche de mousse (32), comportant une ouverture (35) qui y est formée, ledit panneau de substrat de porte de déploiement étant ajusté dans ladite ouverture, le périmètre dudit panneau principal séparé et dudit panneau de porte étant aligné avec ladite configuration de rainure d'affaiblissement ménagée dans ladite surface intérieure de recouvrement.
